# EUROPEAN PATENT SPECIFICATION

(11) **EP 0 353 419 B1**
(45) Date of publication and mention of the grant of the patent: **20.10.1993**
(21) Application number: 89110216.2
(22) Date of filing: 06.06.1989
(51) Int. Cl.: H01M 2/02, H01M 10/04

(54) **Process for producing the housing and partitions of a storage battery**
Verfahren zur Herstellung des Gehäuses und der Trennwände einer Akkumulatorenbatterie
Procédé de production du bac et des cloisons d'un accumulateur

(30) Priority: 09.06.1988 FI 882728
(43) Date of publication of application: 07.02.1990
(73) Proprietor: NESTE OY, FIN-02150 Espoo (FI)
(72) Inventor: Kärnä, Toivo, SF-06400 Porvoo (FI); Kemppi, Ahti, SF-16601 Järvelä (FI); Savolainen, Esko, SF-15880 Hollola 3 (FI); Lind, Kalevi, SF-33720 Tampere (FI); Jääskö, Niilo, SF-06400 Porvoo (FI); Walden, Olli, SF-02110 Espoo (FI); Nieminen, Jukka-Pekka, SF-06400 Porvoo (FI)
(74) Representative: Tiedtke, Harro, Dipl.-Ing.

(56) References cited:
- WO-A-87/04011
- GB-A- 1 416 680
- GB-A- 2 041 632
- PATENT ABSTRACTS OF JAPAN, vol. 5, no. 99 (E-63)[771], 26th June 1981; & JP-A-56 42 950 (MIYAGAWA KASEI KOGYO K.K.) 21-04-1981

## Description

The present invention concerns a procedure for producing an envelope structure for a storage battery consisting of a housing, a cover and partitions separating cells from, said battery comprising one or several cells enclosed within the housing, each cell containing electrolyte and monopolar plates and/or bipolar plates separated by separator plates and coated with positive and/or negative active mass, and requisite electrical connectors interconnecting the cells and/or plates.

Storage batteries are conventionally produced so that the cells are stacked in a box provided with partitions, and as the last phase of the storage battery production, a cover is fixed on top of the box so that the electrolyte solution will not run from one compartment into another or out therefrom.

Document WO-A-8 704 011 discloses a storage battery , comprising one or several cells enclosed in a housing , each cell containing electrolyte and monopolar and bipolar plates coated with positive and/or negative active mass and separated by means of separator plates , and requisite electrically conductive connectors connecting the plates and/or cells. The wall separating or sealing off each cell from adjacent cells and/or from the housing has been formed by filling the spaces around and/or in the interstices of the plate stacks with an electrically insulating and electrolyte-impermeable substance which has been cured directly in situ for forming tightly sealing and/or insulating walls. WO-A-8 704 011 does not however disclose the spacer structure (38, 42) of the present invention.

Document GB-A-1 416 630 shows a procedure for producing an envelope structure in which the cells of the battery must be pre-assembled, and which battery, therefore, consists of a plurality of envelope structures around the cells. The pins cited in this document only have the function to position the cell casings correctly in the housing of the battery. Furthermore, they are fixedly connected to the moulding wall so that they do not remain in the cast but are removed when the mould is opened. Since it is described that the pins engage in holes of the cell casings, the thickness of the housing is not necessarily determined thereby.

JP-A-5642950 shows a manufacturing process for producing an envelope structure of a battery. In order to produce a housing having a rigid core, the core has plug-shaped projections.

The aim of the invention is to produce a procedure in which the number of various production steps can be reduced and entirely omit provision of glued joints. A specific aim of the invention is to achieve a procedure which enables producing an envelope structure for a storage battery consisting of a housing, a cover and partitions separating the cells in one work phase. The aim of the invention is in addition to achieve a procedure in which the cells need not be stacked into a box.

The aims of the invention are gained with a procedure which is mainly characterized in that the the envelope structure for the storage battery is produced by casting with electricity insulating and electrolyte-impermeable material, using in casting the cell assembly of the storage battery as inner mould and a separately constructed mould structure as outer mould, and that the wall thicknesses of the battery housing are defined with the aid of a spacer structure remaining inside the cast.

With the procedure of the invention are gained several advantages. In the procedure of the invention the number of various production steps is reduced. The leakage risk of the storage battery produced with the procedure of the invention also decreases because the joints, no longer needed, will be excluded, whereby also the mechanical strength of the storage battery is improved. In the procedure of the invention, the wall thicknesses of the housing can be dimensioned accurately. In the procedure of the invention the cells need not necessarily be stacked into a box provided with partitions.

The invention is described in detail referring to a number of advantageous embodiments of the invention presented in the figures of the drawing attached, whereto, however, the invention is not intended to be exclusively confined.

Fig. 1 presents an advantageous embodiment of a storage battery produced with the procedure of the invention partly sectioned in partly sectioned axonometric view.

Fig. 2 presents an advantageous embodiment of the monopolar and bipolar plate employed in the storage battery of Fig. 1 in axonometric view.

Fig. 3 presents an advantageous embodiment of the mould structure employed in the procedure of the invention in schematical elevational view.

Fig. 4 presents a cell assembly provided with gas vault structure turned upside down against the bottom plate of the mould structure, as schematical elevational view.

Fig. 5 presents a mobile mould structure with the aid of which a spacer structure is pushed against the cell assembly, presented in schematical elevational view.

Fig. 6 presents in schematical elevational view a mobile mould structure in a step in which the spacer structure has been brought against the cell assembly and the mobile mould structure starts moving away from the cell assembly.

Fig. 7 presents in schematical elevational view a mobile mould structure which has moved away from the cell assembly a distance equivalent to the wall thickness.

Fig. 8 presents in schematical elevational view another advantageous embodiment of the mould structure employed in the procedure of the invention.

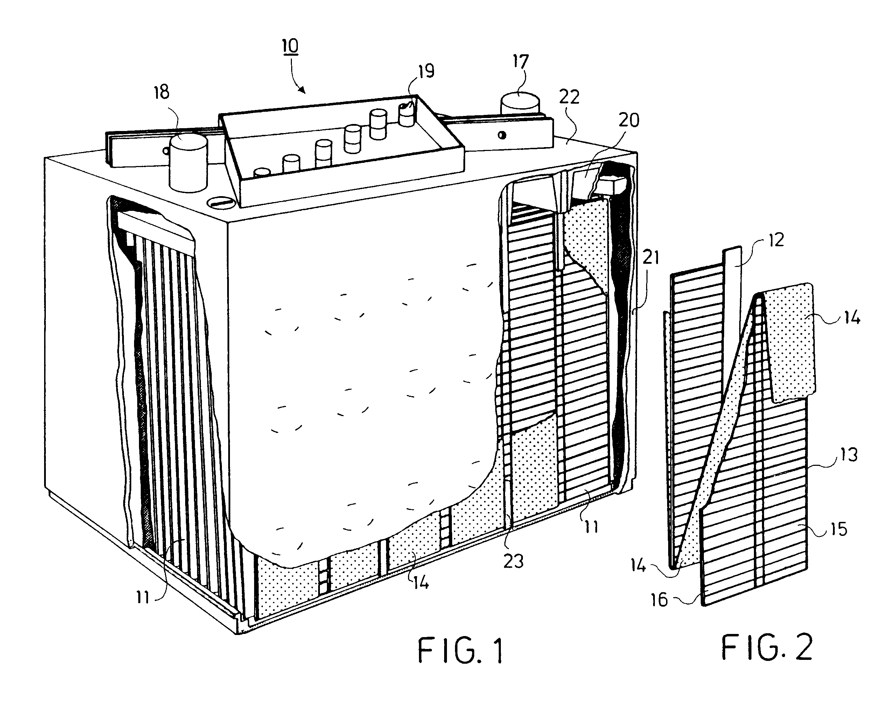

In the embodiments presented in Figs 1-8 the cells of the storage battery 10 are indicated by reference numeral 11. Each cell 11 contains electrolyte and monopolar and/or bipolar plates separated from each other by separator plates 14 and coated with positive and/or negative active mass.

In Fig. 1 the positive terminal of the storage battery 10 is indicated by reference numeral 17 and the negative terminal by reference numeral 18. With reference numeral 19 is indicated an overpressure valve and with reference numeral 20 a gas vault structure. The envelope structure of the storage battery 10 consists of a housing 21, a cover 22 and partitions 23 separating the cells 11 from each other.

In Fig. 2 the monopolar plate is indicated by reference numeral 12 and the bipolar plate by reference numeral 13. The bipolar plate 13 is coated with positive active mass 15 and negative active mass 16, whereas the monopolar plate 12 is coated merely with either positive active mass 15 or negative active mass 16. In the embodiment of Fig. 2, felt-like separator plate material is used for separator plates 14 so that electrolyte has been absorbed therein.

In the most common embodiment of the invention the following measures are accomplished. The terminal connectors are welded on the monopolar plates 12. The gas vaults 20 are disposed on top of the cells 11 and the mould structure 30 is disposed around the cell assembly. The thickness of the cast is determined with the aid of a spacer structure 38, said spacer structure 38 remaining inside the cast. The spacer structure 38 mediates the pressure of the mould structure 30 and holds the cell assembly together, whereby the cell assembly is controlled without binding or glueing. The walls of the mould structure 30 may be mobile or fixed.

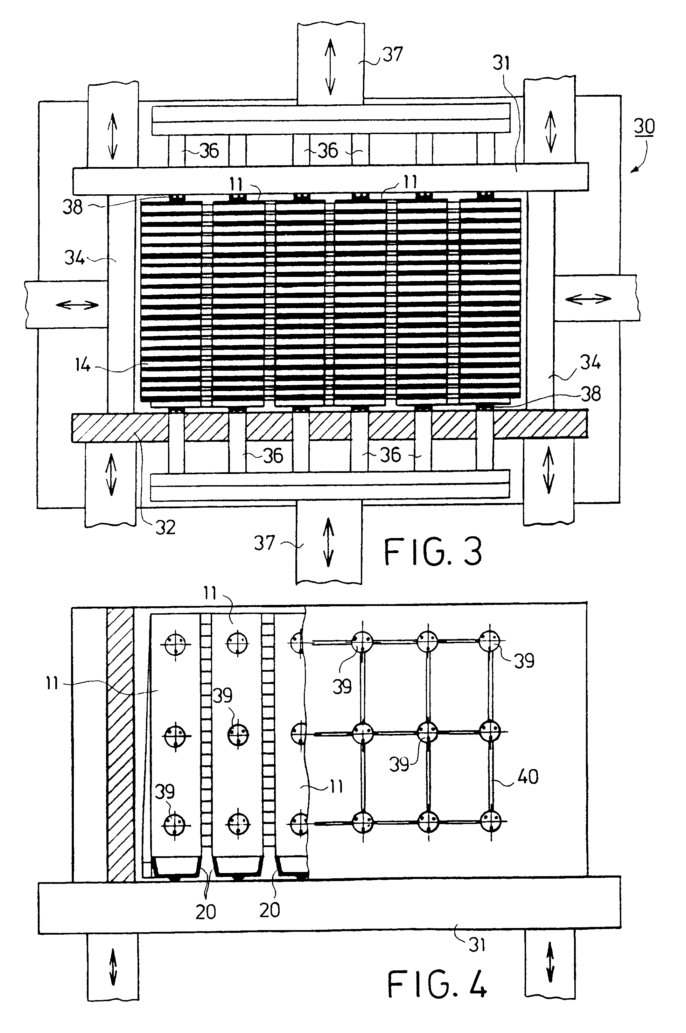

In Figs 3-7, the mould structure used in the procedure of the invention is generally indicated by reference numeral 30. In said embodiment the mould structure 30 consists of the walls 31 and 32 in the direction of the sides of the storage battery 10, said walls being mobile. Furthermore, the mould structure 30 includes end walls 33 and 34 which in said embodiment are equally mobile. The two other opposite walls of the mould structure 30 are not visible in Fig. 3.

On the side walls 31 and 32 of the mould structure 30 is attached a pusher means 37 provided with pins 36. In the embodiment as shown in Figs 3-7, for the spacer structure is used a spacer structure 38 defined by spacing washers 39. The spacing washers 39 and their clips 40 constitute the net-like spacer structure 38, as shown in Fig. 4.

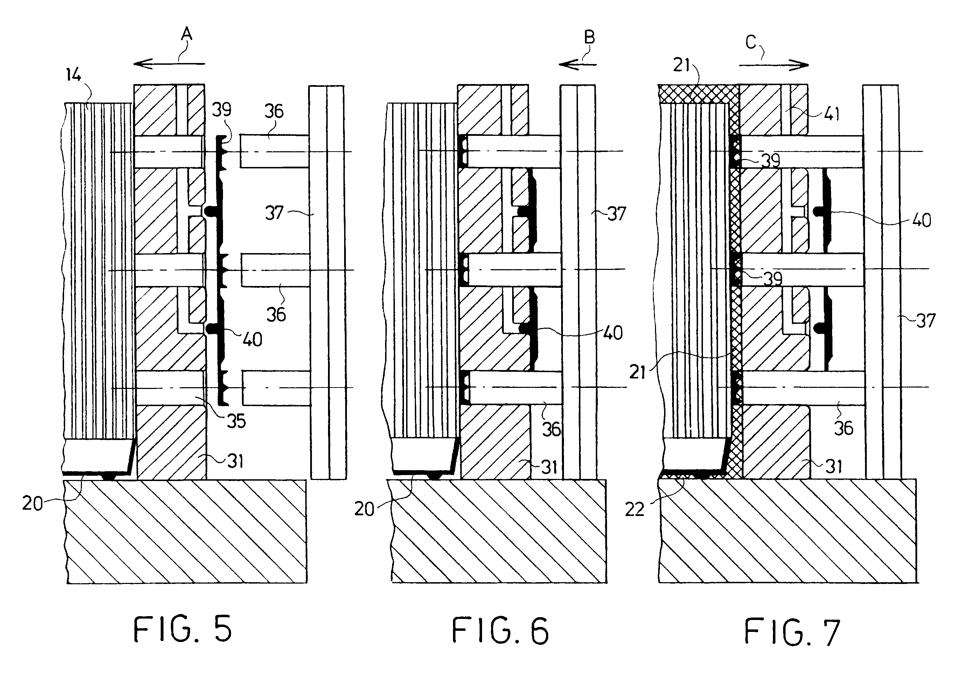

The movements of the side wall 31 of the mould structure 30 can best be seen in Figs 5-7. In the phase as shown in Fig. 5 the side wall 31 has moved in the direction depicted by arrow A and is now against the cell 11. The pins 36 of the pusher means 37 have withdrawn from the holes 35 in the side wall 31.

In the phase 37 shown in Fig. 6 the pusher means 37 moves in the manner indicated by arrow B, whereby the pins 36 push the spacing washers 39 of the spacer structure 38 against the cell 11, whereas the clips 40 remain fixed on the outer wall of the side wall 31 of the mould structure 30.

As shown in Fig. 7, the side wall 31 has moved in the direction indicated by arrow C a distance determined by the spacing washers 39, whereby after the cast, an envelope structure for a storage battery 10 consisting of a housing 21, a cover 22 and partitions 23 separating the cells 11 from each other is produced. Finally, the clips 40 are blown away with the aid of out-blowing system of passages 41. As is best seen in Fig. 7, the spacing washers 39 remain inside the cast.

As taught by an advantageous embodiment of the invention presented in Figs 3-7, the above-mentioned cell assembly is transferred to form the inner mould as follows. The parts 30 and 31 of the outer mould 30 placed in the direction of the sides of the storage battery 10 urge against the sides of the cell assembly so that it becomes compressed into its final thickness, and at the same time, supported by them, the battery system can be transferred away from the stacking jig. Thereafter, the terminals 17 and 18 of the storage battery 10 (Fig. 1) can be fixed to the end pieces of the set of connecting wires e.g. by soldering. Thereafter, the press rods 36 penetrating through the holes 35 in the side pieces 31 and 32 of the outer mould 30 cut, while pushing in, first the spacing washers 39 provided with teeth off from the clips 40 and, thereafter, they push them ahead themselves against the sides of the cell assembly, whereby they start to support the cell assembly, and the parts 31 and 32 of the outer mould 30 may withdraw a distance equivalent to the wall thickness from the surface of the cell assembly. Thereafter, a gas vault structure 20 is disposed above the final upper surface of the cell assembly, enabling provision of a gas space above the cell assembly. Now the part 31 of the outer mould 30 pushes itself in place and the terminals 17 and 18 (Fig. 1) intrude tightly into the apertures of appropriate shape (not depicted) therein. Also the other parts of the outer mould 30 push themselves in place. The outer mould 30 may be so turned that the storage battery 20 being cast is upside down, although this is not necessary. Thereafter, the space between the inner and outer moulds can be filled with the material mentioned in the Finnish patent application No. 855096, whereby the envelope structure for the storage battery 10 consisting of the housing 21, the cover 22, and partitions separating the cells 11 from each other is produced.

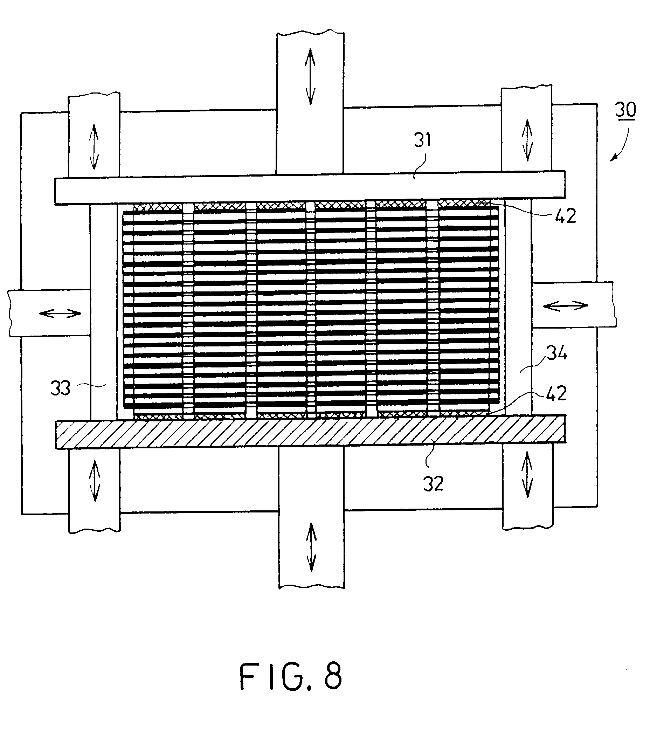

As shown in another advantageous embodiment presented in Fig. 8, the other side part 32 of the outer mould 30 serves as a stacking base and said stacking is so carried out that spacer strips 42 equivalent to the above-mentioned spacing washers 39 are first placed on said base, above which the cells are stacked. After a required quantity of cell elements have been stacked, spacer strips 42 are placed thereon and the side piece 31 of the outer mould 30 to be placed thereon is pressed in place. The terminals 17 and 18 (Fig. 1) are welded in place, the part 31 of the outer mould 30 pushes itself in place, the end pieces 33 and 34 of the outer mould 309, or, if several storage batteries are cast in rows in the same outer mould 30, the intermediate and end pieces of the outer mould 30 push themselves in place, and thereafter, the collecting of the cover part and the envelope structure is carried out in the manner described in the previous embodiment.

In the foregoing is described merely a few advantqageous embodiments of the invention more in detail, and it is obvious to a person skilled in the art that the procedure of the invention can be modified in a plurality of ways within the scope of the inventive idea presented in the accompanying claims below.

The present invention concerns a procedure for producing the envelope structure for a storage battery (10) consisting of a housing (21), a cover (22) and partitions (23) separating cells (11). Said battery (10) comprises one or several cells (11) enclosed within the housing, each cell (11) containing electrolyte and monopolar plates and/or bipolar plates separated by separator plates (14) from each other and coated with positive and/or negative active mass, and the requisite electrical connectors interconnecting the cells (11) and/or plates. The envelope structure of the storage battery (10) is produced by casting with electrically insulating and electrolyte-impermeable material, using in the casting the cells of the storage battery (10) as inner mould and a separately constructed mould structure as outer mould. The wall thickness of the housing of the storage battery (10) is defined with the aid of a spacer structure remaining inside the cast.

## Claims

1. A procedure for producing an envelope structure for a storage battery (10) consisting of a housing (21), a cover (22) and partitions (23) separating at least one cell (11) enclosed within said housing (21), comprising the steps of coating monopolar plates (12) and/or bipolar plates (13) with positive and/or negative active mass (15, 16),
arranging said plates (12, 13), with separator plates (14) inbetween, one behind the other to form said at least one cell (11), said separator plates (14) being capable of receiving electrolyte,
arranging requisite electrical connectors so that said cells (11) and/or plates (12, 13) are interconnected and
casting said envelope structure integrally with an electrically insulating and electrolyte-impermeable material in a mould structure (30),
**characterized in that**
before casting said envelope structure a plurality of movable mould walls (31, 32, 33, 34, 36) of said mould structure (30) are moved towards said plates (12, 13) in order to compress them to the final battery thickness with a spacer structure (38, 42) interposed therebetween, wherein the wall thickness of said housing (21) is determined by said spacer structure (38, 42) remaining inside the cast.

2. Procedure according to claim 1, characterized in that for the spacer structure (38) are used spacing washers (39).

3. Procedure according to claim 2, characterized in that the spacing washers (39) of the spacer structure (38) are inserted through the holes (35) in the mould structure (30).

4. Procedure according to claim 1, characterized in that for the spacer structure (38) are used spacer strips (42) which before casting are placed between the cell assembly and the separately built mould structure serving as outer mould.

5. Procedure according to any one of claims 1-4, characterized in that prior to the casting, a gas vault structure (20) is disposed in the upper part of the cells (11).

6. Procedure according to any one of claims 1-3 or 5, characterized in that prior to the casting the mould structure (30 ) is so turned that the battery (10) to be cast is upside down.

## Patentansprüche

1. Verfahren zur Herstellung einer Hüllstruktur für eine Speicherbatterie (10), die aus einem Gehäuse (21), einem Deckel (22) und Trennwänden (23) besteht, die zumindest eine Zelle (11) abtrennen, welche innerhalb des Gehäuses (21) umschlossen ist, mit folgenden Schritten,
Beschichten von monopolaren Platten (12) und/oder bipolaren Platten (13) mit positiver und/oder negativer, aktiver Masse (15, 16),
Anordnen der Platten (12, 13) mit zwischenliegenden Trennplatten (14) eine hinter der anderen, um zumindest eine Zelle (11) zu bilden, wobei die Trennplatten (14) ein Aufnehmen von Elektrolyt zulassen,
Anordnen von erforderlichen, elektrischen Anschlüssen, so daß die Zellen (11) und/oder Platten (12, 13) untereinander verbunden sind und
einstückiges Gießen der Hüllstruktur mit einem elektrisch isolierenden und Elektrolyt-undurchlässigen Material in einer Gießform (30),
dadurch gekennzeichnet, daß
vor dem Gießen der Hüllstruktur eine Vielzahl von beweglichen Gießwänden (31, 32, 33, 34, 36) der Gießform (30) gegen die Platten (12, 13) bewegt werden, um diese unter Zwischenlage einer Abstandsstruktur (38, 42) zur letztendlichen Batteriedicke zusammenzudrücken, wobei die Wanddicke des Gehäuses (21) durch die Abstandsstruktur (38, 42) bestimmt ist, welche im Guß verbleibt.

2. Verfahren nach Anspruch 1, dadurch gekennzeichnet, daß als Abstandsstruktur (38) Distanzscheiben (39) verwendet werden.

3. Verfahren nach Anspruch 2, dadurch gekennzeichnet, daß die Distanzscheiben (39) der Abstandsstruktur (38) durch die Löcher (35) in der Gießform (30) eingefügt werden.

4. Verfahren nach Anspruch 1, dadurch gekennzeichnet, daß als Abstandsstruktur (38) Distanzstreifen (42) verwendet werden, die vor dem Gießen zwischen die Zellenbaugruppe und der gesondert hergestellten, als äußere Form dienende Gießform gesetzt werden.

5. Verfahren nach einem der Ansprüche 1 bis 4, dadurch gekennzeichnet, daß eine Gaswölbungsstruktur (20) vor dem Gießen im oberen Teil der Zellen (11) angeordnet wird.

6. Verfahren nach einem der Ansprüche 1 bis 3 oder 5, dadurch gekennzeichnet, daß die Gießform (30) vor dem Gießen so gedreht wird, daß die zu gießende Batterie (10) auf dem Kopf steht.

## Revendications

1. Procédé pour la production d'une structure d'enveloppe destinée à une batterie d'accumulateur (10) constituée par un logement ou bac (21), un couvercle (22) et des parois (23) séparant au moins une cellule (11) renfermée dans le logement (21), comprenant les étapes consistant à revêtir des plaques monopolaires (12) et/ou des plaques bipolaires (13) avec une masse active positive et/ou négative (15, 16),
agencer ces plaques (12, 13) avec des plaques de séparation (14) entre elles, l'une derrière l'autre pour former au moins une cellule (11), les plaques de séparation (14) pouvant recevoir l'électrolyte,
disposer les connecteurs électriques nécessaires de façon que les cellules (11) et/ou les plaques (12, 13) soient reliées entre elles, et
couler la structure d'enveloppe solidairement avec le matériau isolant électriquement et imperméable à l'électrolyte dans une structure de moule (30),
caractérisé en ce qu'avant la coulée de cette structure d'enveloppe on déplace une pluralité de parois de moule mobiles (31, 32, 33, 34, 36) de cette structure de moule (30) en direction de ces plaques (12, 13) afin de les comprimer jusqu'à l'épaisseur de batterie finale avec une structure d'espacement (38, 42) intercalée, l'épaisseur de paroi du logement (21) étant déterminée par la structure d'entretoise (38, 42) restant à l'intérieur de la coulée.

2. Procédé selon la revendication 1, caractérisé en ce que pour la structure d'entretoise (38), on utilise des rondelles d'espacement (39).

3. Procédé selon la revendication 2, caractérisé en ce que les rondelles d'espacement (39) de la structure d'entretoise (38) sont introduites dans les trous (35) de la structure de moule (30).

4. Procédé selon la revendication 1, caractérisé en ce que la structure d'entretoise (38) comporte des barrettes d'entretoise (42) qui sont placées avant la coulée entre l'ensemble de cellules et la structure de moule construite séparément servant de moule extérieur.

5. Procédé selon l'une quelconque des revendications 1-4, caractérisé en ce qu'avant la coulée, on dispose une structure de couronne de gaz dans la partie supérieure des cellules (11).

6. Procédé selon l'une quelconque des revendications 1-3 ou 5, caractérisé en ce qu'avant la coulée, la structure de moule (30) est tournée de telle manière que la batterie est coulée en position renversée de haut en bas.
